(19) Europäisches Patentamt
European Patent Office
Office européen des brevets

(11) EP 4 361 721 B1

(12) EUROPEAN PATENT SPECIFICATION

(45) Date of publication and mention of the grant of the patent:
**22.04.2026 Bulletin 2026/17**

(21) Application number: **22204447.1**

(22) Date of filing: **28.10.2022**

(51) International Patent Classification (IPC):
***G03B 3/10*** *(2021.01)* ***G03B 5/00*** *(2021.01)*
***H02P 7/025*** *(2016.01)* ***H02P 25/034*** *(2016.01)*

(52) Cooperative Patent Classification (CPC):
**G03B 3/10; G03B 5/00;** G03B 2205/0069; H02P 7/025; H02P 25/034

# (54) UNCERTAINTY-BASED MOTION CONTROL MODULE TO ADJUST LENS POSITION IN A CAMERA SYSTEM

UNSICHERHEITSBASIERTES BEWEGUNGSSTEUERUNGSMODUL ZUR ANPASSUNG DER LINSENPOSITION IN EINEM KAMERASYSTEM

MODULE DE COMMANDE DE MOUVEMENT BASÉ SUR L'INCERTITUDE POUR RÉGLER LA POSITION D'OBJECTIF DANS UN SYSTÈME DE CAMÉRA

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**01.05.2024 Bulletin 2024/18**

(73) Proprietor: **Goodix Technology (HK) Company Limited**
**Sheung Shui (HK)**

(72) Inventors:
- **Kurosz, Rafal Krzysztof**
  **3000 Leuven (BE)**
- **Laneau, Johan**
  **3000 Leuven (BE)**
- **Stoev, Youlian Hristov**
  **3000 Leuven (BE)**
- **Thijs-Nica, Ioana Gabriela**
  **3000 Leuven (BE)**

(74) Representative: **Lippert Stachow Patentanwälte Rechtsanwälte**
**Partnerschaft mbB**
**Königsbrücker Straße 124**
**01309 Dresden (DE)**

(56) References cited:
**US-A1- 2015 185 586**
**US-A1- 2016 061 780**
**US-A1- 2017 163 196**
**US-B2- 8 379 903**
**US-B2- 9 049 366**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

## Field of the invention

The present invention relates to an uncertainty-based motion control module for a camera system configured to adjust a position of a lens module using the uncertainty-based motion control module, to a camera system comprising the uncertainty-based motion control module, and to a method for adjusting a position of a lens module using the uncertainty-based motion control module.

## Background art

The motion control of camera lenses in the mobile consumer devices (smart-phones) are subject to diverse requirements, which can be met using different combination of sensors, control algorithms and actuators.

On the actuator side, voice-coil motors (VCM) are a relatively mature technology, offering low price, high precision, high speed, sufficient range (stroke) and force, as well as relatively consistent behavior. A VCM actuator is driven by a dedicated motion-control chip and it moves the individual lens, or a lens group based on the demanded set-points from the user and higher-level logic. Achieving consistent behavior is particularly challenging due to the limited price and therefore related high variability among the different actuators.

On the sensor side, the motion control module can use different signals measured from the actuator and the lens to perform its operation. The used signals may include one or more of the following: a voltage (V) signal, a current (I), or a signal indicating the lens position (P).

A typical dynamic relation between the lens driver chip (the actuator) signal and the lens position (P) in many precision servo control systems is also valid in the case of, for instance, spring-based VCM actuators and can be presented as the below Transfer Function (TF):

$$P(s) = \frac{\omega_0}{s^2 + 2\zeta\omega_0 s + \omega_0^2}, \qquad \text{(equation 1)}$$

Where P(s) is the lens position, s is the Laplace variable, $\omega_0 = 2\pi F_0$ where $F_0$ is the resonant frequency of a camera lens module, $\zeta = 1/(2 * Q)$ is the damping factor, and Q is the quality factor of a camera lens module.

The main uncertain parameters in equation 1 are $F_0$ and Q (or alternatively damping $\zeta$). The methods for determining the values of these parameters, known as "system identification" methods, are well known. As an example, the book "System Identification: Theory for the User" by Ljung, 1999, Prentice Hall PTR describes such methods.

Figures 2A and 2B shows a representation of a family of possible Transfer functions plots from equation 1 describing different device behaviors wherein each transfer function represents the positions of the lens for different control signals. Figure 2A shows the Bode magnitude plot of several VCM transfer functions corresponding respectively to the several different devices. The horizontal axis of Figure 2A shows the frequency in Hertz (Hz) and the corresponding vertical axis shows the magnitude of the transfer functions in decibels (dB). Figure 2B shows the corresponding Bode phase plots wherein the horizontal axis represents the frequency in Hertz (Hz) and the vertical axis represents the phase angle of the transfer function in degrees.

The large-scale manufacturing of the devices imposes requirements on the technology due to the high production rate. Typically cheaper devices show larger uncertainty in their mechanical parameters. Therefore this needs to be taken into account by the motion control algorithm. Related to this, a distinction can be made between three types of adaptations and tunings required by the device.

The first type of adaptation and tuning of the lens module would be when the characterization is performed outside of the production line, often on a large representative batch of the actuator and lens modules. The result may be a statistics determining the dynamics of (some representative test set of) the actuator and lens modules. This characterization of the statistical behavior of the actuator and lens modules is performed in a laboratory and can be done using a full range of high-grade equipment like lasers, temperature and pressure chambers, for relatively long periods of measurements. However, it has the advantage of not slowing down the operation of the production line, as it is performed outside of it. The main disadvantage of this type of adaptation and tuning is that it results in wide ranges for the estimates of the parameters in all possible environments. This means that the adjustment of the lens module position during use of the device would not be very accurate, resulting in low quality images.

The second type of adaptation and tuning of the lens module is called production calibration as it is performed during the production process on each product item. This means that it needs to rely on a much more limited set of measurements, as otherwise it would excessively delay the production process thereby increasing costs. Since it takes time for each product item, it affects the productivity and therefore the unit price. Therefore it is highly undesirable to spend time on production calibration for a large volume of manufactured products.

The third type of adaptation and tuning of the lens module is performed during the normal operation of the consumer device using the measurements signals available in a driver chip of the normal phone. The calibration could take place during the start-up of the phone, or just after the phone application is launched. For example the device may comprise a Hall sensor data for position (P) and/or voltage (V) and/or current (I) signals measurement with relatively limited resolution. This calibration does not affect the productivity of the manufacturing process. However, it needs to be performed fast, so that user experience is not affected and the user does not notice it. One possibility is to use the time available during the startup of the user-level camera application, by injecting a sequence of signals in the actuator, which would permit to quickly adjust the dynamic characteristics of the actuator obtained during characterization.

Based on the signals used in the operation of the actuator several kind of control algorithms can be distinguished:

- Open-Loop (OL) control configuration: As one extreme case, spring-supported VCMs can be operated without any sensor feedback, which results in a lower price of the device.
- Closed-Loop (CL) control configuration: To get better performance in the high-end devices, a position (P) signal feedback is performed, using for example a dedicated Hall sensor, which results typically in higher price range for the product.
- Self-Sensing (SS) control configuration: A cheaper, intermediary option is to use signals which are more easy to obtain, like actuator voltage (V) and current (I) signals.

Figure 1 shows an example of a camera system wherein a lens driver chip generates a control signal to drive the actuator and lens module. The control signal in Figure 1 is generated based on a feedback measurement at the actuator and lens module. The feedback measurement in Figure 1 can be a position signal feedback and/or a voltage and current signal feedback.

The values of the parameters from equation 1 in the actual product actuator are uncertain and depend on unit-to-unit differences, environmental conditions, product aging and maybe others. This uncertainty is one of the main challenges for the consumer-grade products operation in real-life outdoor environment.

Open-loop control configurations typically require a difficult compromise - they either can deliver limited and/or unreliable performance in different operating conditions and device life-span, or they require extensive and fragile characterization and production calibration, which typically contradicts the required low unit price.

Some of the requirements for the lens positioning are:

- The required position needs to be reached in a required time and required precision.
- Typically shorter lens moves are required to take shorter amount of time.
- Typically the desired precision is specified in absolute terms, independent of the length of the lens motion, but robustness can be guaranteed often in relative terms, depending on the size of the lens motion.

In open-loop control configurations, typical approaches involve making the actuator generate a motion control signal having a robust shape, which is not sensitive to the variations of the different parameters. This is well-known and usually referred as "input shaping" methods. Examples of input shaping methods can be found in "Optimal reference shaping for dynamical systems: theory and applications", CRC Press, 2009, by Singh, T. and "Command shaping for flexible systems: A review of the first 50 years", International journal of precision engineering and manufacturing, 153-168, 2009, by Singhose, W.

In an example of such an input shaping method, the parameters $F_0$ and Q can be used by an open-loop control configuration to design a feed-forward signal. The feed-forward signal will be used to control the lens module to the desired position. This could be done using the so-called "input-shaping" formulas depending on the parameters $F_0$ and Q. The input-shaping signal is a sequence of pulses at times $t_i$ with magnitudes $A_i$. For instance, a kind of input-shaping signal is the so-called "Zero-vibration shaper" and comprises two pulses.

An input shaping signal comprising a number n of pulses is also known as a n steps input shaping signal. For instance, an input shaping signal comprising two pulses is called a two steps input shaping signal, an input shaping signal comprising three pulses is called a three steps input shaping signal and so on, The application of such methods requires good knowledge of the involved parameters. Otherwise the performance due to residual vibrations of the lens module may deteriorate drastically, as shown in Figures 3A and 3B for an open loop control configuration using a zero-vibration shaper (two pulses) as input shaping signal. Figures 3A and 3B show respectively the lens position and the control signal. In Figures 3A and 3B, the horizontal axis represents time in seconds and the vertical axis represents the amplitude of the respective represented signal. From Figures 3A and 3B, it can be seen that the time needed for the method to set the position of the lens to have less than a 2% overshoot error with 10% uncertain $F_0$ is more than 40 milliseconds, offering a poor performance. The solid line in Figures 3A and 3B shows the exact value of the parameters (if the lens behavior would be ideal, that is, if the uncertainly of the parameter $F_0$ would be zero) and the dashed line shows the system behavior with mismatched parameters, that is, when the values of the parameters assumed during the design phase (ideal behavior) do not match with the real values of the parameters when the system is in use. The robustness to the parameters variation can be improved by introducing an input shaping signal with more pulses, for example the so called "Zero Vibration and Derivative shaper" which comprises three pulses.

The reduction of the effect of the uncertainty by composing inputs with more steps, at the cost of longer transient times is shown in Figures 4A and 4B, which represent the same signals than Figures 3A and 3B but this time for an input shaping signal comprising three and two steps and not having mismatched parameters. In Figure 4A, line 402 indicates the lens position as a function of the time when using a two steps input shaping signal, line 404 indicates the lens position as a function of the time when using a three steps input shaping signal, and line 406 indicates the lens position as a function of the time when using a four steps input shaping signal. In Figure 4B, line 408 shows the values of the control signal for the lens driver as a function of the time when using a two steps input shaping signal, line 410 shows the values of the control signal for the actuator as a function of the time when using a three steps input shaping signal, and line 412 shows the values of the control signal for the actuator as a function of the time when using a four steps input shaping signal. As we can see, by composing inputs with more steps, the effect of the uncertainty of the parameters can be reduced at the cost of longer transient times.

Figure 5 shows how precision deteriorates as the uncertainty with regard to parameter $F_0$ is growing when using a two-step input shaping signal, a three-step input shaping signal and a four step input shaping signal in lines 502, 504 and 506 respectively.

However, making input signals to the actuator more robust to parameter variations, leads to slower position response during actual operation by the consumer of the device, as seen on Figures 4A and 4B, which may result in lower quality of the camera pictures in some situations. Therefore increasing the number of pulses, especially for shorter lens movements, may slow down the transient, so this is not a solution, which can be used always.

Furthermore, algorithms based on adapting the input shaping signal, do not provide faster seek times when the lens motion is small. This is because in the prior art algorithms time, the time to move from a first lens position to a second lens position when having perfect knowledge of the parameters $F_0$ and Q (that is, when the uncertainty of the parameters $F_0$ and Q is close to zero) is independent of the distance between the a first lens position and the second lens position.

US 2017/163196 A1 discloses an apparatus for driving a voice coil actuator of a camera performing input shaping based on a resonance frequency of a voice coil actuator and damping of vibration in the voice coil actuator to generate a control signal using a shaping signal as an initial input from an unshaped control signal, and thereby drives the voice coil actuator using the control signal subjected to input shaping which is provided to remove the resonance of the voice coil actuator.

US 2015/185586 Al discloses a motor driving apparatus including a weight generating unit generating a weight of an external input signal using a damping ratio of a motor apparatus; and a driving signal generating unit generating a driving signal including a first signal generated by reflecting the weight in the external input signal and a second signal corresponding to the external input signal.

US 8 379 903 B2 discloses an apparatus for driving a voice coil actuator of a camera wherein, when an input shaping execution unit generates a shaping signal using a resonance frequency of the voice coil actuator to output a drive control signal subjected to input shaping, a drive circuit unit controls an operation of the voice coil actuator connected to a rear end according to the drive control signal using the shaping signal as an initial input.

US 9 049 366 B2 discloses a device for driving an under damped VCM actuator comprising a first generator operable to read a first manufacture data from an image signal processor (ISP) and to generate a half natural period of the VCM actuator by selecting a value approximate to the first data in a first table of the device, and a second generator operable to read a second manufacture data from the ISP and to generate the maximum overshoot, K, of the VCM actuator by selecting a value approximate to the second data.

US 2016/061780 A1 discloses determining a target distance to move a lens by an actuator to focus a scene on an image sensor, where moving the lens by the actuator causes an associated lens vibration having at least one actuation char acteristic, determining a scan sequence having a plurality of successive measurements, each measurement having at least a first measurement parameter and subsequent measurement parameter, each measurement parameter including at least one step and at least one time delay, moving the lens the target distance for each successive measurement based on the mea surement parameters of each successive measurement, mea suring a performance indicator of each successive measure ment, and determining at least one achiation characteristic based on the first measurement parameter of the measurement having the highest performance indicator.

Thus, a new approach is needed to improve the adjustment of the lens taking into account the uncertainty of the parameters without the cited disadvantages.

## Summary of the invention

Existing solutions do not use the information about how uncertainty of the different parameters changes depending on the size of the distance of the movement that the camera lens will perform, thereby being too conservative.

The invention allows to use the most aggressive strategy possible, but still be in the prescribed precision bounds. For small movements (movements where the lens module will move from an initial position to a final position and the distance between the initial and the final position is short) actually the uncertainty of the parameter is not very large, because the actual change is position dependent and the position is not changing too much.

In this way, the invention provides faster seek times for small lens motions. This is quite important from commercial point of view, because most of the lens movements are actually small adjustments (after the first large movement).

The main difference and advantage of the proposed solution is the use of motion profiles which take into account the uncertainty of the plant parameters during the particular motion. The proposed solution results in very fast movements when low uncertainty of the parameter is predicted.

Competing open-loop solutions are based on user configured conservative robustness estimate and on some average $F_0$ and Q values. Thus the number of input-shaping steps is pre-selected and never changes. This results in overly-conservative motion profile, taking too long especially for short lens movements.

**Brief description of the drawings**

The present invention will be discussed in more detail below, with reference to the attached drawings, in which:

Figure 1 schematically shows a control loop for a camera system according to the prior art.

Figures 2A and 2B shows a representation of an actuator Transfer function from control signal to position for a camera system.

Figure 3A and 3B show respectively a representation of the lens position and the control signal values as a function of time.

Figures 4A and 4B shows respectively a representation of the lens position and the control signal values as a function of time for different input shaping signals.

Figure 5 shows the step response error as a function of the uncertainty of parameter $F_0$ for a one-step, a two-step and a three step input shaping signal and error [%] = (requested position - actual position) divide by the actual position.

Figures 6A and 6B show respectively the uncertainty of parameters $F_0$ and Q as a function of the lens position.

Figures 7A and 7B show an example of how to apply a method according to the embodiment of the invention.

Figure 8 schematically shows a camera system comprising a motion control device according to an embodiment of the invention.

Figure 9 shows a flowchart of a method according to tan embodiment of the invention.

The figures are meant for illustrative purposes only, and do not serve as restriction of the scope or the protection as laid down by the claims.

**Description of embodiments**

The invention applies different motion profiles based on the available information about the parameter uncertainties for the particular demanded motion.

Information is actually the characterization and calibration data, which help us to estimate the correct parameter uncertainty during the specific move. This provides a faster motion. The input shaping signals will be selected to satisfy absolute precision requirement. In this way, an input shaping strategy will be determined depending on the parameter uncertainty and the robustness properties of the corresponding different input shaping signals. More uncertainty in the parameters in the particular motion require choosing a more robust input signal. Longer movements of the lens typically require more robust input signal to satisfy the absolute precision requirements. But shorter movements can be made much faster by selecting a less robust input signal.

The uncertainty of the parameters $F_0$ and Q changes with the position of the lens. This relationship is shown on Figures 6A and 6B and can be measured during production of the lens module and updated during the lifetime of the lens module. Figure 6A shows the uncertainty of parameter $F_0$ in the vertical axis and the lens position in the horizontal axis. Figure 6B shows the uncertainty of parameter Q in the vertical axis and the lens position in the horizontal axis.

Typically individual lens modules show a similar quadratic pattern for $F_0$ as a function of the lens position, as shown on Figure 6A. The correct system parameters can be stored in lookup-tables $F_0$ (distance) and Q (distance) and used during the operation of the camera system to drive the lens module. For example, the parameters $F_0$ and Q can be used with "input shaping" type of solutions to reduce the residual vibration. However selecting the most conservative and robust worst case design may not meet the requirements for how quickly the lens needs to move, especially when the lens moves small distances.

Figure 8 schematically shows a camera system 800 comprising a motion control device 806 according to an embodiment of the invention. The camera system 800 comprises further a motor and lens module 812.

The motion control device 806 comprises processing circuitry 804. The processing circuitry 804 is configured to receive a motion request to move the lens module from an initial position to a final position, determine a middle position between the initial position and the final position, determine an initial parameter value, a middle parameter value and a final parameter value based respectively on the initial position, the middle position and the final position, estimate a parameter uncertainty based on a maximum value and a minimum value wherein the maximum value is the greatest value among the initial parameter value, the middle parameter value and the final parameter and the minimum value is the smallest value among the initial parameter value, the middle parameter value and the final parameter, and select a type of input shaping signal based on the estimated parameter uncertainty.

The motion control device 806 comprises further a memory 808 coupled to the processing circuitry 804 and configured to store a look up table comprising pairs of values wherein each pair of values comprises a position and a parameter value associated to said position. The processing circuitry 804 is further configured to determine the initial, middle and final parameter values by looking up in the look up table stored in the memory 808 or by the formula which describing the relationship between F0/Q and the distance/position.

Figure 9 shows a flowchart of a method according to an embodiment of the invention, which will be explained in relation to Figures 7A and 7B, which show an application of said method for two different lens module movements. As said, during the assembly line operation of the camera system, data similar as the one shown on Figures 6A and/or 6B can be obtained. This data can be stored, for instance, in lookup tables, or other representative functions wherein the parameter $F_0$ as a function of the distance and/or the parameter Q as a function of the distance are stored.

In step 902 of the method of Figure 9, a request to move the lens module from an initial position A to a final position B is received by the processing circuitry 804 and the method proceeds to step 904.

In step 904 of Figure 9, the method calculates, by the processing circuitry 804, a distance D between the initial position A and the final position B and a middle position C is determined such that a distance $D_1$ between the initial position A and the middle position C is equal to half the distance D and a distance $D_2$ between the middle position C and the final position B is also equal to half the distance D. The calculated distances $D_1$ and $D_2$ are labeled respectively in Figure 7A as 702 and 704, and in Figure 7B as 722 and 724.

In step 906, the method determines, by the processing circuitry 804, the values $F_{0A}$ , $F_{0B}$, and $F_{0C}$ which represent respectively the expected value of the parameter $F_0$ at the initial position A, the middle position C and the final position B. The method may determine, by the processing circuitry 804, the values $F_{0A}$ , $F_{0B}$, and $F_{0C}$ by respectively looking in the look up tables the corresponding parameter value for each of the lens locations A,B,C. Figures 7A and 7B show respectively an example of the calculated values $F_{0A}$ , $F_{0B}$, and $F_{0C}$ for different initial position, middle position and final position A, B and C. In alternative embodiments, the method, instead of determining the values $F_{0A}$, $F_{0B}$, and $F_{0C}$, may determine, in a similar way as described for the values $F_{0A}$ , $F_{0B}$, and $F_{0C}$, the values $Q_A$, $Q_B$ and $Q_C$ which represent respectively the expected value of the parameter $Q_0$ at the initial position A, the middle position C and the final position B. In an alternative embodiment, the method may determine both the values $F_{0A}$ , $F_{0B}$, and $F_{0C}$ and the values $Q_A$ , $Q_B$ and Qc.

In step 908, the method will determine, by the processing circuitry 804, the value $maxF_{0ABC}$ as the maximum value among the values $F_{0A}$ , $F_{0B}$, and $F_{0C}$, and will determine the value $minF_{0ABC}$ as the minimum value among the values $F_{0A}$ , $F_{0B}$, and $F_{0C}$. The values $maxF_{0ABC}$ and $minF_{0ABC}$ define the boundaries of the rectangle defined by points 706, 708, 710 and 712 in Figure 7A, and the boundaries of the rectangle defined by points 726, 728, 730 and 732 in Figure 7B. In an alternative embodiment, the maximum and minimum values $maxQ_{ABC}$ and $minQ_{ABC}$ may be calculated instead of $maxF_{0ABC}$ and $minF_{0ABC.}$. In a further alternative embodiment, the values $maxQ_{ABC}$, $minQ_{ABC}$, $maxF_{0ABC}$ and $minF_{0ABC}$ may be calculated.

In step 910, the method calculates, by the processing circuitry 804, the frequency uncertainty estimate $\Delta F = maxF_{0ABC} - minF_{0ABC}$ and/or $\Delta Q = maxQ_{ABC} - minQ_{ABC}$.

In step 912, the method determines, by the processing circuitry 804, the effect of the calculated uncertainty ΔF and/or ΔQ for different input shaping strategies at the desired distance D. This can be done, for instance, using known functions like the one plotted on Figure 5, which represents the relative expected errors for ΔF and ΔQ when using different input shaping strategies at the desired distance D. According to Figure 5, certain errors in F0 lead to certain errors in position. In Fig 5, the error is in the vertical axis and the difference ΔF is in the horizontal axis. The error is determined based on the difference ΔF and the bigger the difference ΔF is, the bigger the error is. For example, if ΔF=5 and the error is required to be less than the target precision error 2%, then, the input shaping signal can have 3 or 4 steps. If ΔF=-10 and the error is required to be less than the target precision error 1%, then, the input shaping signal can have 4 steps. In this way, the method can check each $F_0$ error on the left and on the right and take the worst case, that is, the one with the highest error, thereby obtaining the absolute error that choosing each of these strategies would result.

In step 914 of the method, taking into account the absolute distance D, which the lens needs to travel, it is evaluated, by the processing circuitry 804, how fast each input shaping strategy can deliver the required distance D. For instance, Figures 4A and 4B show that a 2-step shaping input will move the lens module in about 5 milliseconds, the 3 step shaping input will require about 10 milliseconds and the 4 shaping input in about 15 milliseconds.

In step 916, the method, by the processing circuitry 804 and based on the results of steps 912 and 914, selects the fastest input shaping strategy, which satisfies the absolute precision requirement required in the product, by evaluating the predicted times to achieve the requested movement when using each of the available input shaping signals and selecting the one with the smallest absolute precision requirement which is within the required error, therefore, whether to use a one-step input shaping signal, a two-step input shaping signal, a three step input shaping signal or other multi-step input shaping signal is determined. Typically short movements of the lens module will result in smaller absolute error which can be achieved by selecting a signal shaping input comprising lower number of steps, which are faster.

In step 918, the method calculates, by the processing circuitry 804, the trajectory parameters corresponding to the selected input shaping strategy based on the center frequency $F_{0u}$ (and/or the center quality parameter $Q_u$) of the uncertainty box wherein the uncertainty box corresponds to the rectangle defined by points 706, 708, 710 and 712 in Figure 7A, and to the rectangle defined by points 726, 728, 730 and 732 in Figure 7B. $F_{0u} = \min F_{0ABC} + \Delta F/2 = \max F_{0ABC} - \Delta F/2$ ($Q_u = \min Q_{ABC} + \Delta Q/2 = \max Q_{ABC} - \Delta Q/2$) and the trajectory shaping parameters at each sampling instant of the selected input shaping signal are applied. Based on the center frequency $F_{0u}$ (and/or the center quality parameter $Q_u$), the input-shaping signal can be determined.

For instance, if a two steps input shaping signal is used, the trajectory parameters $A_i$ at each sampling instant $t_i$ can be calculated based on $F_{0u}$ and $Q_u$ using below equation 2:

$$\begin{bmatrix} A_i \\ t_i \end{bmatrix} = \begin{bmatrix} \frac{1}{1+K} & \frac{K}{1+K} \\ 0 & \frac{\pi}{\omega\sqrt{1-\zeta^2}} \end{bmatrix}, \qquad \text{(equation 2)}$$

Wherein:

$$K = e^{\left(\frac{-\zeta\pi}{\sqrt{1-\zeta^2}}\right)}.$$

And wherein $\omega = 2\pi F_{0u}$ and $\zeta = \frac{1}{2*\mathrm{Qu}}.$.

If a three steps input shaping signal is used, the trajectory parameters $A_i$ at each sampling instant $t_i$ can be calculated based on $F_{0u}$ and $Q_u$ using below equation 3:

$$\begin{bmatrix} A_i \\ t_i \end{bmatrix} = \begin{bmatrix} \frac{1}{1+2K+K^2} & \frac{K}{1+2K+K^2} & \frac{K^2}{1+2K+K^2} \\ 0 & \frac{\pi}{\omega\sqrt{1-\zeta^2}} & \frac{2\pi}{\omega\sqrt{1-\zeta^2}} \end{bmatrix}. \qquad \text{(equation 3)}$$

Other equations can be used if there are more pulses or if other kind of input shaping signal is used. The input-shaping signal will be used to control the lens module to the desired position. When the customer wants the lens module to move to another position, steps 902 to 918 can be executed again.

The plots on Figures 7A and 7B are given for frequency $F_0$ only, which typically presents more problems due to the existence of a minimal point, which is typically not present in Q. The two plots on Figures 7A and 7B illustrate the method of Figure 9 in the two different cases. In Figure 7A, $F_0$ may be present between A and B or not. For that reason, a point C is necessary to determine the rectangle. In Figure 7B, $F_0$ will be always between A and B.

Similar approaches in the framework of this disclosure can be applied when position signals are available in closed loop configuration in addition to voltage-current signals.

The shaping pulses during the movement of the lens may be more complicated than the square ones shown on the Figures. Different options are enumerated for example in "Optimal reference shaping for dynamical systems: theory and applications", CRC Press, 2009, by Singh, T.

While the invention has been described with reference to exemplary embodiments, it will be understood by those skilled in the art that various changes may be made without departing from the scope of the invention as defined by the claims. Therefore, it is intended that the invention not be limited to the particular embodiments disclosed, but that the invention will include all embodiments falling within the scope of the appended claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. A motion control method for controlling a motor of a camera system to move a lens module, the motion control method comprising:

   Receiving (902), at a processing circuitry (804), a motion request to move the lens module from an initial position to a final position;
   Determining, by the processing circuitry (804), a middle position between the initial position and the final position;
   Determining (906), by the processing circuitry (804), an initial parameter value, a middle parameter value and a final parameter value based respectively on the initial position, the middle position and the final position;
   Estimating (910), by the processing circuitry (804), a parameter uncertainty based on a maximum value and a minimum value wherein the maximum value is the greatest value among the initial parameter value, the middle parameter value and the final parameter and the minimum value is the smallest value among the initial parameter value, the middle parameter value and the final parameter; and
   Selecting (916), by the processing circuitry (804), a type of input shaping signal based on the estimated parameter uncertainty.

2. The motion control method according to claim 1 wherein the initial, middle and final parameter values are determined by looking up in a look up table stored in a memory (808) and comprising pairs of values wherein each pair of values comprises a position and a parameter value associated to said position.

3. The motion control method according to any of the previous claims, wherein a distance from the initial position to the middle position is equal to a distance between the middle position and the final position.

4. The motion control method according to any of the previous claims, wherein each of the initial, middle and final parameter values comprise a frequency value related to the lens module.

5. The motion control method according to any of the previous claims, wherein each of the initial, middle and final parameter values comprise a quality value related to the lens module.

6. The motion control method according to any of the previous claims, wherein the type of input shaping signal comprises one of a one step input shaping signal, a two step input shaping signal, a three step input shaping signal and a four step input shaping signal.

7. The motion control method according to any of the previous claims, wherein the parameter uncertainty is equal to the difference between the maximum value and the minimum value.

8. The motion control method according to any of the previous claims, wherein the type of input shaping signal is selected based on a target precision error for the lens module and wherein the target precision error is determined based on the difference between the maximum value and the minimum value and the bigger the difference is, the bigger the target precision error is.

9. The motion control method according to any of the previous claims wherein the type of input shaping signal is selected based on an amount of time required when using each type of input shaping signal to move the lens module from the initial position to the final position.

**10.** The motion control method according to claim 9, wherein the type of input shaping signal is further selected such that a precision error for the lens module is lower than the target precision error.

**11.** The motion control method according to any of the previous claims, further comprising generating, by the processing circuitry (804), a drive signal to drive the motor based on the selected type of input shaping signal.

**12.** The motion control method according to any of the previous claims further comprising calculating (918), by the processing circuit (804), trajectory parameters based on the parameter uncertainty, the minimum value and the maximum value.

**13.** A motion control device (806) for controlling a motor of a camera system (800) to move a lens module, the motion control device (806) comprising processing circuitry (804) configured to perform the method according to claim 1.

**14.** The motion control device (806) according to claim 13 further comprising a memory (808) coupled to the processing circuitry (804) and configured to store a look up table comprising pairs of values wherein each pair of values comprises a position and a parameter value associated to said position, and wherein the processing circuitry (804) is further configured to determine the initial, middle and final parameter values by looking up in the look up table stored in the memory (808).

**15.** A camera system (800) comprising:

a lens module;
a motor; and
a motion control device according to any of claims 13 and 14.

**Patentansprüche**

**1.** Bewegungssteuerungsverfahren zum Steuern eines Motors eines Kamerasystems zum Bewegen eines Objektivmoduls, wobei das Bewegungssteuerungsverfahren umfasst:

Empfangen (902) einer Bewegungsanforderung zum Bewegen des Objektivmoduls von einer Ausgangsposition zu einer Endposition an einer Verarbeitungsschaltung (804);
Bestimmen einer Mittelposition zwischen der Ausgangsposition und der Endposition durch die Verarbeitungsschaltung (804);
Bestimmen (906) eines Anfangsparameterwerts, eines Mittelparameterwerts und eines Endparameterwerts durch die Verarbeitungsschaltung (804) auf der Grundlage der Ausgangsposition, der Mittelposition bzw. der Endposition;
Schätzen (910) einer Parameterunsicherheit durch die Verarbeitungsschaltung (804) auf der Grundlage eines Maximalwerts und eines Minimalwerts, wobei der Maximalwert der größte Wert unter dem Anfangsparameterwert, dem Mittelparameterwert und dem Endparameterwert ist und der Minimalwert der kleinste Wert unter dem Anfangsparameterwert, dem Mittelparameterwert und dem Endparameterwert ist; und
Auswählen (916) eines Typs eines Eingangsformungssignals durch die Verarbeitungsschaltung (804) auf der Grundlage der geschätzten Parameterunsicherheit.

**2.** Bewegungssteuerungsverfahren gemäß Anspruch 1, wobei die Anfangs-, Mittel- und Endparameterwerte durch Nachschlagen in einer in einem Speicher (808) gespeicherten Nachschlagetabelle bestimmt werden, die Wertepaare umfasst, wobei jedes Wertepaar eine Position und einen dieser Position zugeordneten Parameterwert umfasst.

**3.** Bewegungssteuerungsverfahren nach einem der vorhergehenden Ansprüche, wobei ein Abstand von der Anfangsposition zur Mittelposition gleich einem Abstand zwischen der Mittelposition und der Endposition ist.

**4.** Bewegungssteuerungsverfahren nach einem der vorhergehenden Ansprüche, wobei jeder der Anfangs-, Mittel- und Endparameterwerte einen Frequenzwert umfasst, der sich auf das Linsenmodul bezieht.

**5.** Bewegungssteuerungsverfahren nach einem der vorhergehenden Ansprüche, wobei jeder der Anfangs-, Mittel- und Endparameterwerte einen Qualitätswert umfasst, der sich auf das Linsenmodul bezieht.

**6.** Bewegungssteuerungsverfahren nach einem der vorhergehenden Ansprüche, wobei die Art des Eingangsformungssignals eines von einem einstufigen Eingangsformungssignal, einem zweistufigen Eingangsformungssignal, einem dreistufigen Eingangsformungssignal und einem vierstufigen Eingangsformungssignal umfasst.

**7.** Bewegungssteuerungsverfahren gemäß einem der vorhergehenden Ansprüche, wobei die Parameterunsicherheit gleich der Differenz zwischen dem Maximalwert und dem Minimalwert ist.

**8.** Bewegungssteuerungsverfahren gemäß einem der vorhergehenden Ansprüche, wobei die Art des Eingangsformungssignals auf der Grundlage eines Zielgenauigkeitsfehlers für das Objektivmodul ausgewählt wird und wobei der Zielgenauigkeitsfehler auf der Grundlage der Differenz zwischen dem Maximalwert und dem Minimalwert bestimmt wird und der Zielgenauigkeitsfehler umso größer ist, je größer die Differenz ist.

**9.** Bewegungssteuerungsverfahren nach einem der vorhergehenden Ansprüche, wobei die Art des Eingangsformungssignals auf der Grundlage einer Zeitdauer ausgewählt wird, die bei Verwendung jeder Art von Eingangsformungssignal erforderlich ist, um das Objektivmodul von der Ausgangsposition in die Endposition zu bewegen.

**10.** Bewegungssteuerungsverfahren nach Anspruch 9, wobei die Art des Eingangsformungssignals ferner so ausgewählt wird, dass ein Präzisionsfehler für das Objektivmodul geringer ist als der Zielpräzisionsfehler.

**11.** Bewegungssteuerungsverfahren nach einem der vorhergehenden Ansprüche, das ferner das Erzeugen eines Ansteuersignals durch die Verarbeitungsschaltung (804) zum Ansteuern des Motors auf der Grundlage des ausgewählten Typs des Eingangsformungssignals umfasst.

**12.** Bewegungssteuerungsverfahren gemäß einem der vorhergehenden Ansprüche, das ferner das Berechnen (918) von Trajektorieparametern durch die Verarbeitungsschaltung (804) auf der Grundlage der Parameterunsicherheit, des Minimalwerts und des Maximalwerts umfasst.

**13.** Bewegungssteuerungsvorrichtung (806) zum Steuern eines Motors eines Kamerasystems (800) zum Bewegen eines Objektivmoduls, wobei die Bewegungssteuerungsvorrichtung (806) eine Verarbeitungsschaltung (804) umfasst, die so konfiguriert ist, dass sie das Verfahren gemäß Anspruch 1 ausführt.

**14.** Bewegungssteuerungsvorrichtung (806) gemäß Anspruch 13, ferner umfassend einen Speicher (808), der mit der Verarbeitungsschaltung (804) gekoppelt und so konfiguriert ist, dass er eine Nachschlagetabelle speichert, die Wertepaare umfasst, wobei jedes Wertepaar eine Position und einen dieser Position zugeordneten Parameterwert umfasst, und wobei die Verarbeitungsschaltung (804) ferner so konfiguriert ist, dass sie die Anfangs-, Mittel- und Endparameterwerte durch Nachschlagen in der im Speicher (808) gespeicherten Nachschlagetabelle bestimmt.

**15.** Kamerasystem (800), umfassend:

ein Objektivmodul;
einen Motor; und
eine Bewegungssteuerungsvorrichtung gemäß einem der Ansprüche 13 und 14.

## Revendications

**1.** Procédé de commande de mouvement pour commander un moteur d'un système de caméra afin de déplacer un module d'objectif, le procédé de commande de mouvement comprenant:

recevoir (902), au niveau d'un circuit de traitement (804), une demande de mouvement pour déplacer le module d'objectif d'une position initiale à une position finale;
déterminer, par le circuit de traitement (804), une position intermédiaire entre la position initiale et la position finale;
déterminer (906), par le circuit de traitement (804), une valeur de paramètre initiale, une valeur de paramètre intermédiaire et une valeur de paramètre finale basées respectivement sur la position initiale, la position intermédiaire et la position finale;
estimer (910), par le circuit de traitement (804), une incertitude de paramètre sur la base d'une valeur maximale et d'une valeur minimale, la valeur maximale étant la plus grande valeur parmi la valeur de paramètre initiale, la valeur de paramètre intermédiaire et la valeur de paramètre finale, et la valeur minimale étant la plus petite valeur parmi la valeur de paramètre initiale, la valeur de paramètre intermédiaire et la valeur de paramètre finale; et sélectionner (916), par le circuit de traitement (804), un type de signal de mise en forme d'entrée sur la base de l'incertitude de paramètre estimée.

2. Procédé de commande de mouvement selon la revendication 1, dans lequel les valeurs de paramètre initiale, intermédiaire et finale sont déterminées en consultant une table de consultation stockée dans une mémoire (808) et comprenant des paires de valeurs, chaque paire de valeurs comprenant une position et une valeur de paramètre associée à ladite position.

3. Procédé de commande de mouvement selon l'une des revendications précédentes, dans lequel une distance entre la position initiale et la position intermédiaire est égale à une distance entre la position intermédiaire et la position finale.

4. Procédé de commande de mouvement selon l'une des revendications précédentes, dans lequel chacune des valeurs de paramètre initiale, intermédiaire et finale comprend une valeur de fréquence liée au module de lentille.

5. Procédé de commande de mouvement selon l'une quelconque des revendications précédentes, dans lequel chacune des valeurs de paramètre initiale, intermédiaire et finale comprend une valeur de qualité liée au module d'objectif.

6. Procédé de commande de mouvement selon l'une des revendications précédentes, dans lequel le type de signal de mise en forme d'entrée comprend l'un parmi un signal de mise en forme d'entrée à une étape, un signal de mise en forme d'entrée à deux étapes, un signal de mise en forme d'entrée à trois étapes et un signal de mise en forme d'entrée à quatre étapes.

7. Procédé de commande de mouvement selon l'une des revendications précédentes, dans lequel l'incertitude du paramètre est égale à la différence entre la valeur maximale et la valeur minimale.

8. Procédé de commande de mouvement selon l'une des revendications précédentes, dans lequel le type de signal de mise en forme d'entrée est sélectionné sur la base d'une erreur de précision cible pour le module d'objectif et dans lequel l'erreur de précision cible est déterminée sur la base de la différence entre la valeur maximale et la valeur minimale, et plus la différence est grande, plus l'erreur de précision cible est grande.

9. Procédé de commande de mouvement selon l'une des revendications précédentes, dans lequel le type de signal de mise en forme d'entrée est sélectionné sur la base d'un temps nécessaire lors de l'utilisation de chaque type de signal de mise en forme d'entrée pour déplacer le module d'objectif de la position initiale à la position finale.

10. Procédé de commande de mouvement selon la revendication 9, dans lequel le type de signal de mise en forme d'entrée est en outre sélectionné de telle sorte que l'erreur de précision pour le module d'objectif soit inférieure à l'erreur de précision cible.

11. Procédé de commande de mouvement selon l'une des revendications précédentes, comprenant en outre générer, par le circuit de traitement (804), un signal d'entraînement pour entraîner le moteur sur la base du type sélectionné de signal de mise en forme d'entrée.

12. Procédé de commande de mouvement selon l'une des revendications précédentes, comprenant en outre calculer (918), par le circuit de traitement (804), des paramètres de trajectoire sur la base de l'incertitude des paramètres, de la valeur minimale et de la valeur maximale.

13. Dispositif de commande de mouvement (806) pour commander un moteur d'un système de caméra (800) afin de déplacer un module d'objectif, le dispositif de commande de mouvement (806) comprenant un circuit de traitement (804) configuré pour exécuter le procédé selon la revendication 1.

14. Dispositif de commande de mouvement (806) selon la revendication 13 comprenant en outre une mémoire (808) couplée au circuit de traitement (804) et configurée pour stocker une table de consultation comprenant des paires de valeurs, chaque paire de valeurs comprenant une position et une valeur de paramètre associée à ladite position, et dans lequel le circuit de traitement (804) est en outre configuré pour déterminer les valeurs de paramètre initiales, intermédiaires et finales en consultant la table de consultation stockée dans la mémoire (808).

**15.** Système de caméra (800) comprenant:

un module d'objectif;
un moteur; et
un dispositif de commande de mouvement selon l'une des revendications 13 et 14.

Fig. 1

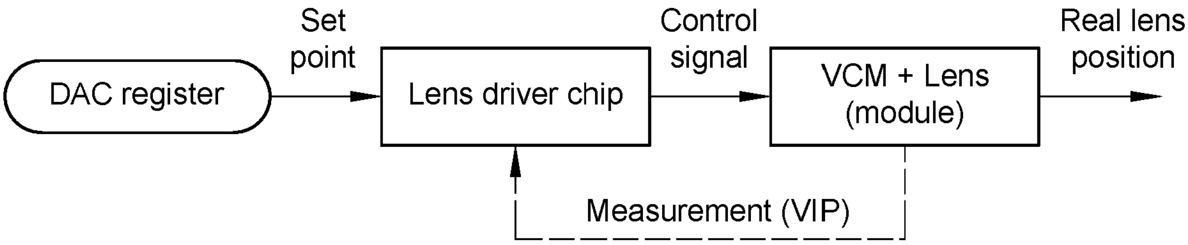


Fig. 2A

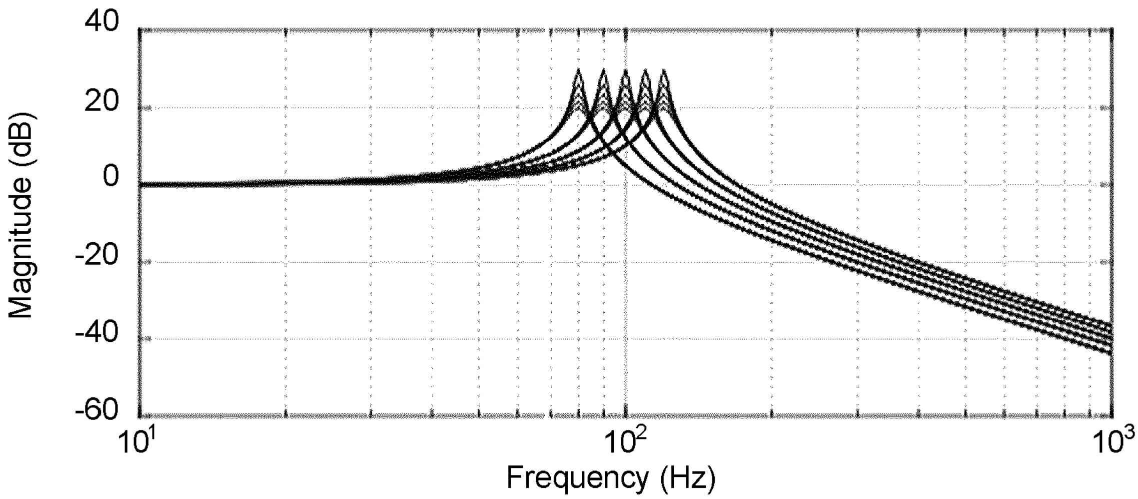


Fig. 2B

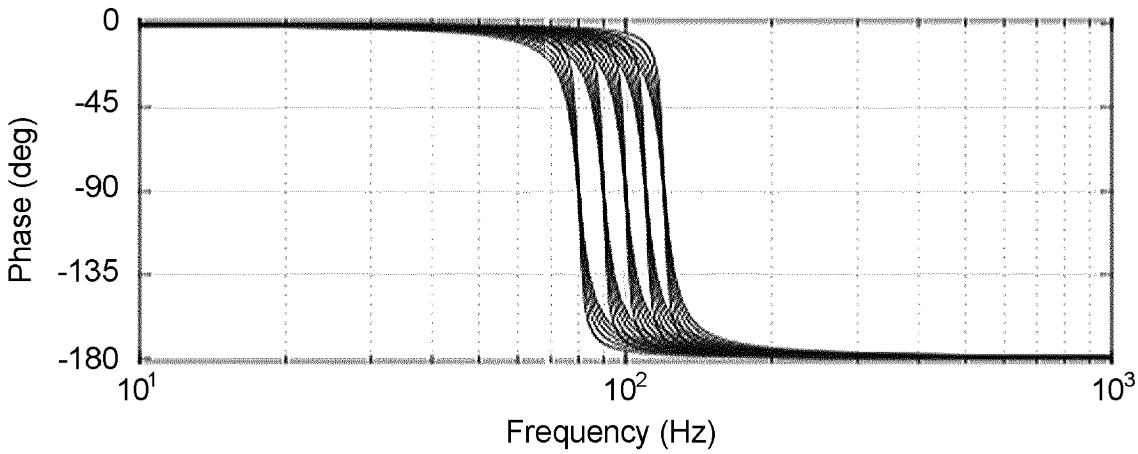

Fig. 3A

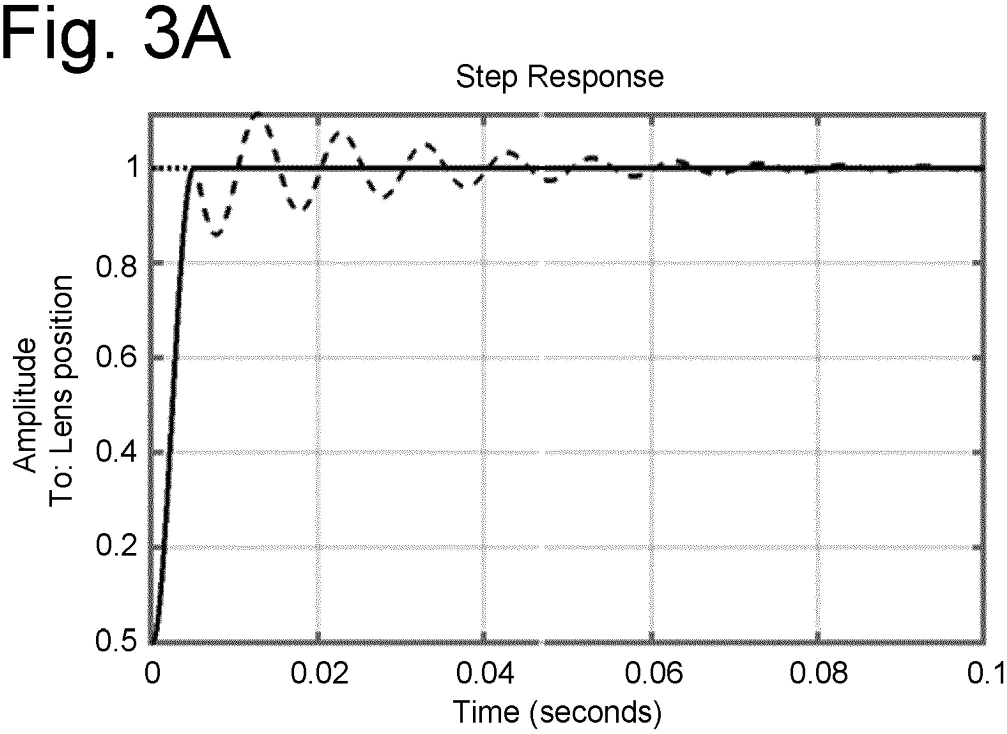
Step Response
Amplitude
To: Lens position
1
0.8
0.6
0.4
0.2
0.5
0
0.02
0.04
0.06
0.08
0.1
Time (seconds)

Fig. 3B

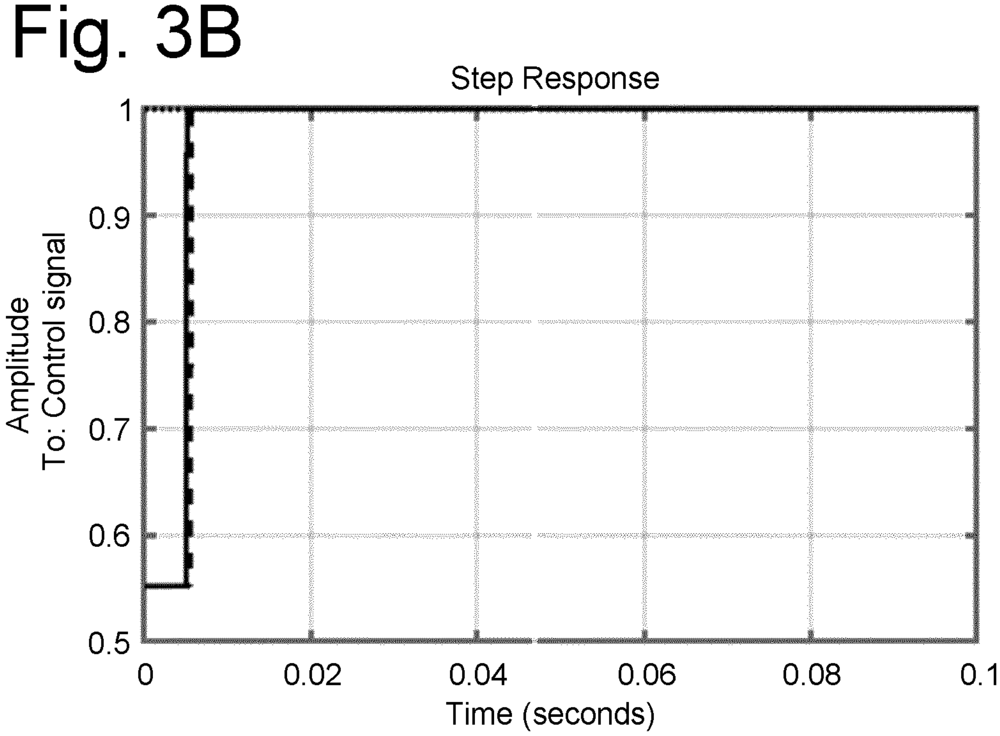
Step Response
Amplitude
To: Control signal
1
0.9
0.8
0.7
0.6
0.5
0
0.02
0.04
0.06
0.08
0.1
Time (seconds)

Fig. 4A

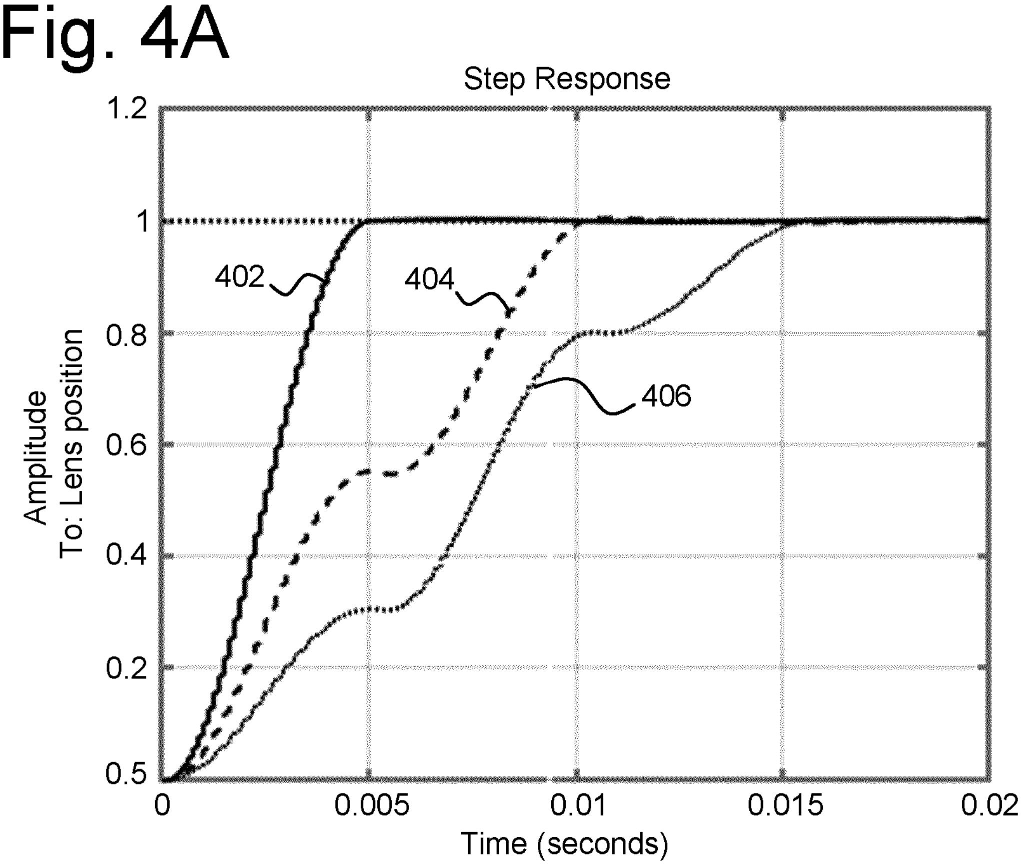
Step Response
1.2
1
0.8
0.6
0.4
0.2
0.5
0
0.005
0.01
0.015
0.02
Amplitude
To: Lens position
Time (seconds)
402
404
406

Fig. 4B

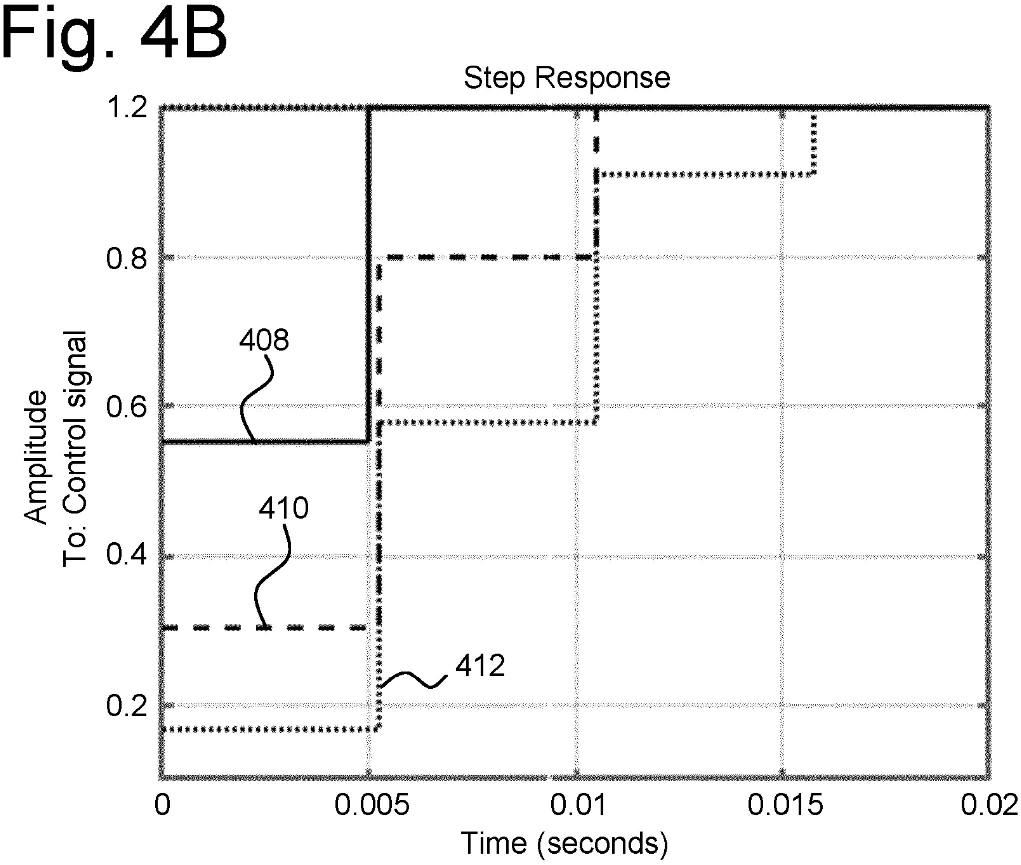
Step Response
1.2
0.8
0.6
0.4
0.2
0
0.005
0.01
0.015
0.02
Amplitude
To: Control signal
Time (seconds)
408
410
412

Fig. 5

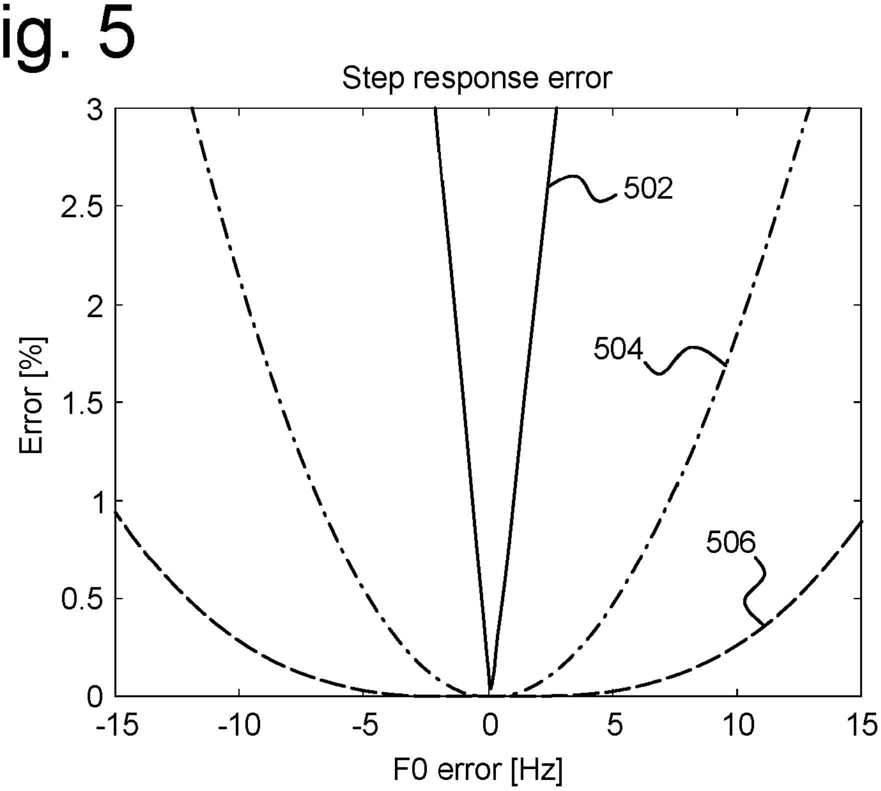


Fig. 6A

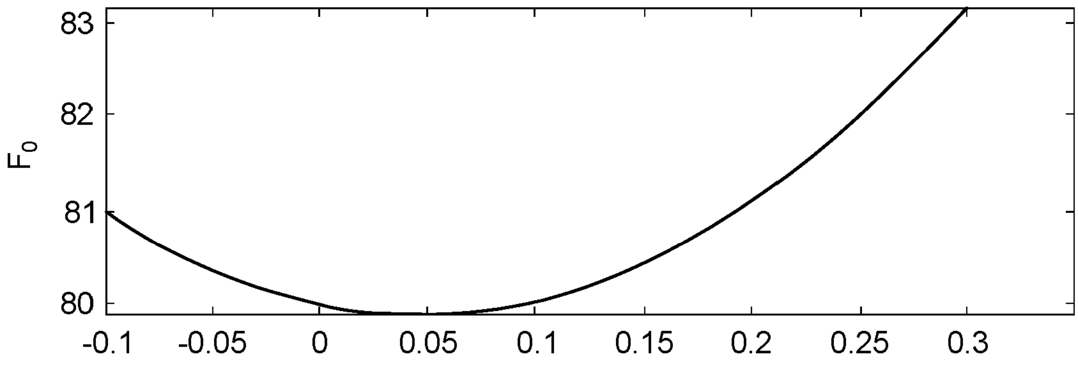


Fig. 6B

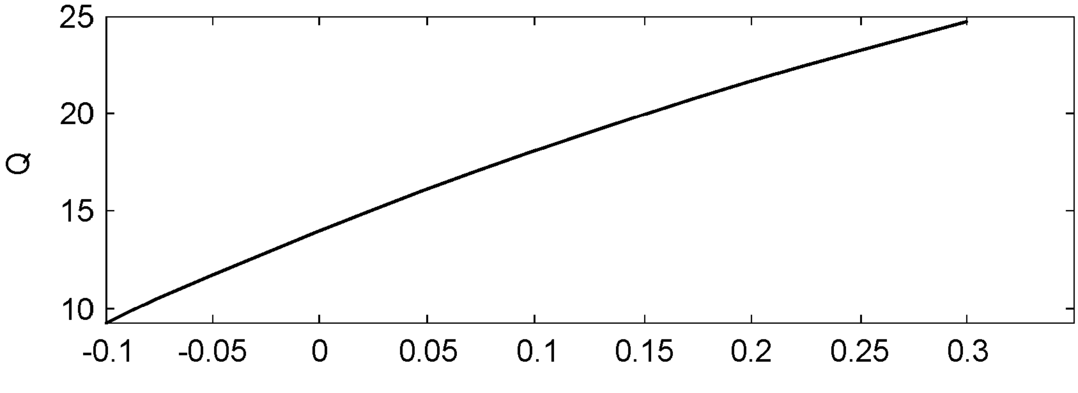

Fig. 7A

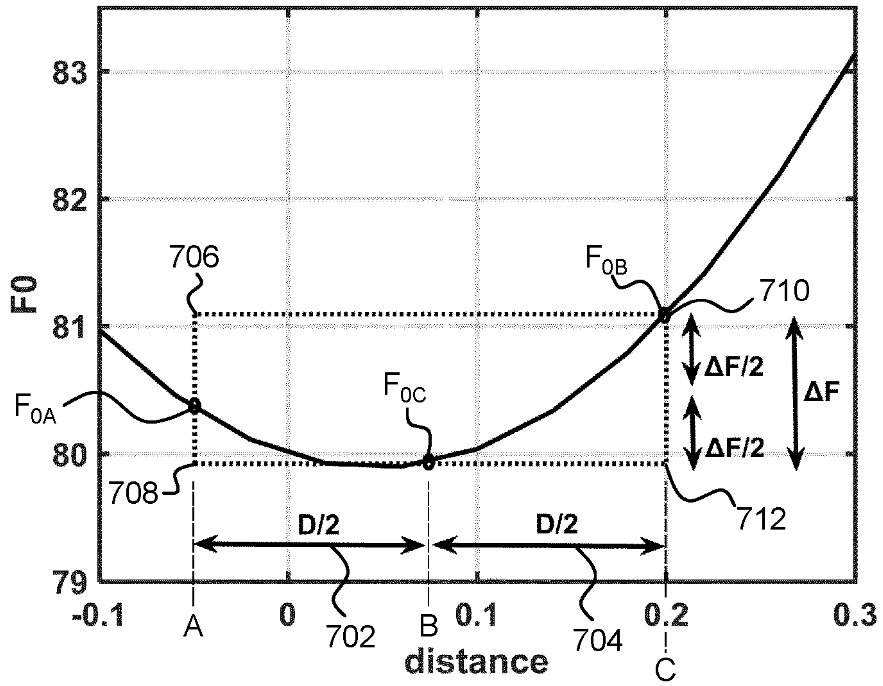
83
82
81
80
79
F0
706
708
F0B
710
F0A
F0C
ΔF/2
ΔF/2
ΔF
712
D/2
D/2
-0.1
A
0
702
B
0.1
704
0.2
C
0.3
distance

Fig. 7B

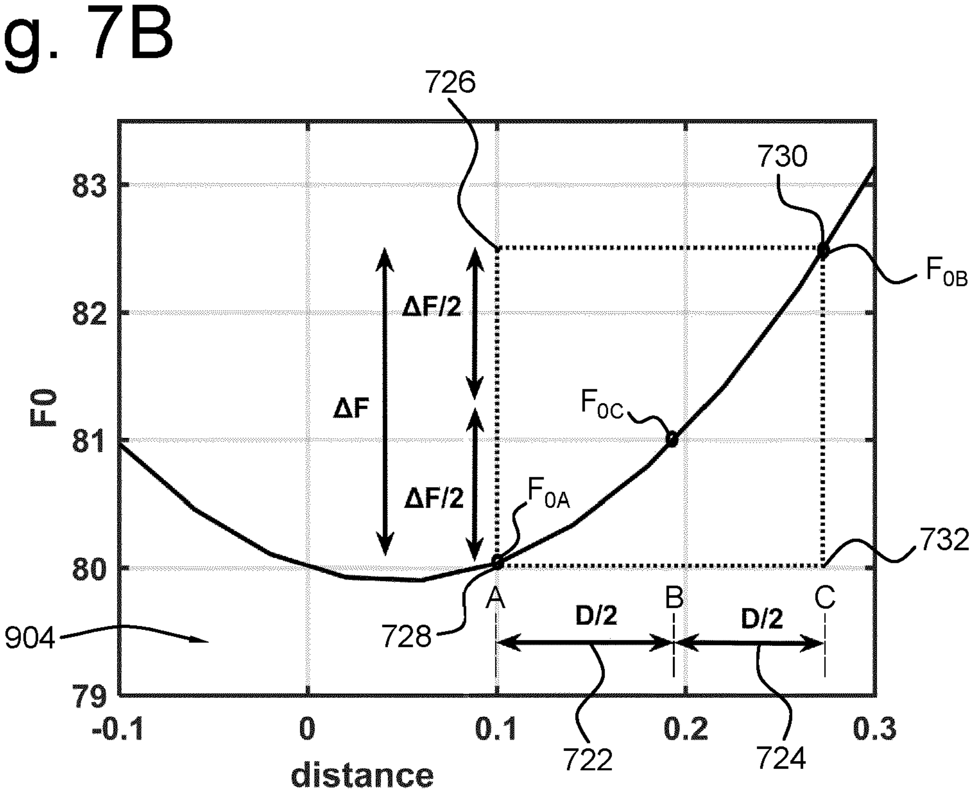
726
730
F0B
83
82
81
80
79
F0
ΔF/2
ΔF
ΔF/2
F0C
F0A
732
A
B
C
D/2
D/2
904
728
-0.1
0
0.1
0.2
0.3
722
724
distance

Fig. 8

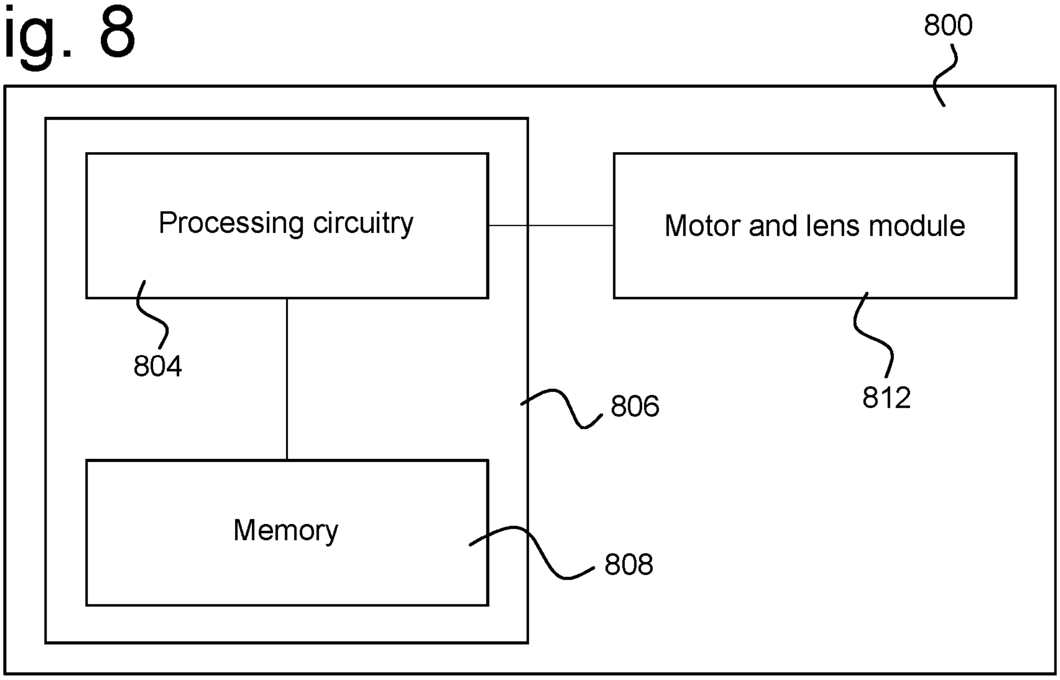
800
Processing circuitry
Motor and lens module
804
806
812
Memory
808

Fig. 9

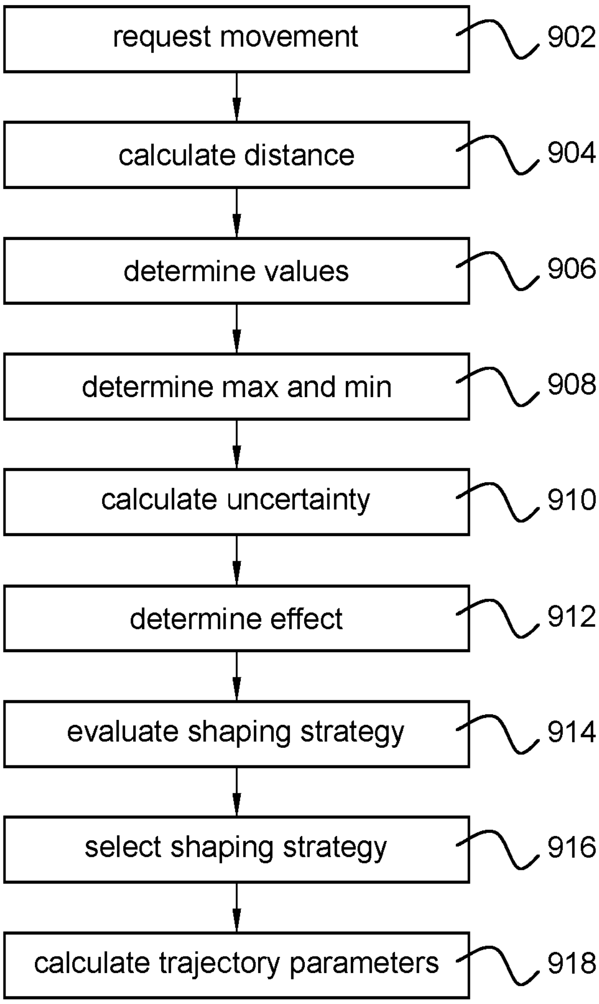
request movement
902
calculate distance
904
determine values
906
determine max and min
908
calculate uncertainty
910
determine effect
912
evaluate shaping strategy
914
select shaping strategy
916
calculate trajectory parameters
918

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2017163196 A1
- US 2015185586 A1
- US 8379903 B2
- US 9049366 B2
- US 2016061780 A1


### Non-patent literature cited in the description


- **LJUNG**. System Identification: Theory for the User. *Prentice Hall PTR*, 1999
- **SINGH, T**. Optimal reference shaping for dynamical systems: theory and applications. CRC Press, 2009
- **SINGHOSE, W.** Command shaping for flexible systems: A review of the first 50 years. *International journal of precision engineering and manufacturing*, 2009, 153-168
- **SINGH, T.** Optimal reference shaping for dynamical systems: theory and applications. CRC Press, 2009